# EUROPEAN PATENT SPECIFICATION

(11) **EP 4 124 528 B1**
(45) Date of publication and mention of the grant of the patent: **05.06.2024**
(21) Application number: 21188339.2
(22) Date of filing: 28.07.2021
(51) Int. Cl.: B60T 17/04

(54) **PNEUMATIC DEVICE**
PNEUMATISCHE VORRICHTUNG
DISPOSITIF PNEUMATIQUE

(43) Date of publication of application: 01.02.2023
(73) Proprietor: KNORR-BREMSE Systeme für Nutzfahrzeuge GmbH, 80809 München (DE)
(72) Inventor: BIRKAS, Viktor Balazs, 1115 Budapest (HU); NEMETH, Huba, 1116 Budapest (HU); FOJTYK, Gabor, 2091 Etyek (HU)

(56) References cited:
- CN-A- 112 985 853
- CZ-B6- 281 175
- JP-A- H08 285 114
- JP-A- H10 129 435
- US-A1- 2002 124 891
- US-A1- 2009 114 865

## Description

The invention relates to a pneumatic device as part of a pneumatic system of a vehicle such as in particular a brake control system, air treatment system or air suspension system.

Pneumatic systems such as air treatment systems, air suspension systems or brake control systems are widely spread in the field of vehicles in general and especially in the field of commercial vehicles. An example of a pneumatic system is a trailer brake system which helps to safely control the brakes of a trailer of a vehicle. This system is controlled by a trailer control module. Among other components, it comprises a plurality of solenoids of different variants in order to control the brake force of the trailer, also when parked.

Patent document JP H10 129435 A discloses a solenoid valve (solenoid) which consists of a body 26 comprising an inlet, an outlet, a pressure chamber and a valve seat and a switching device 25 comprising magnet spools that apply force to a valve piston in order to press it against or lift it of the valve seat and thus control the valve opening.

The most common variants of solenoids in such systems are on the one hand 2/2-directional-valves like a normally open solenoid valve (NO-solenoid) or a normally closed solenoid valve (NC-solenoid) and on the other hand 3/2-directional-valves. Those solenoids are mounted on a pneumatic device like the trailer control module. In the state of the art, variants of solenoids can be installed in different locations of the pneumatic device. In the past, this has led to human errors that solenoids have been installed in wrong locations, where a different variant of solenoid should have been installed, thus leading to unnecessary scrap or excessive rework, which is costly regarding both, time and money.

Against the described background, it is the objective of the invention to provide a solution which avoids the above described problems and prevents an incorrect mounting of solenoids on a pneumatic device.

This objective is solved by a pneumatic device, a solenoid valve and a system according to the independent claims. Further advantageous embodiments of the invention are presented in the dependent claims.

The pneumatic device according to the invention belongs to a pneumatic system, in particular to a brake control system, air treatment system or air suspension system of a vehicle and is configured to receive at least one specific solenoid valve out of solenoid valves of different types. The pneumatic device comprises a coupling section to be coupled with a coupling counterpart section of the solenoid valve, wherein the coupling section is configured in a way that only the one specific type of solenoid valve can be mounted correctly by means of a mutual form-fit design with respect to the particular type of solenoid valve. Thus it can be assured that mounting a wrong type of solenoid valve onto the pneumatic device can be prevented as no other type of solenoid valve fits into the coupling section than the correct one. As a consequence the human error of mounting the wrong type of solenoid can be excluded which leads in less scrap and less effort for rework.

A solenoid valve according to the invention comprises a coupling counterpart section, wherein the coupling counterpart section is shaped at least partly inversely to the specific shape of a coupling section of the pneumatic device according to the invention. "Shaped inversely" means that the coupling counterpart section is shaped in a manner that it fits into the coupling section of the pneumatic device and the solenoid valve can be mounted thereto. The shape is configured such that only a specific valve type is mountable to the corresponding specific coupling section of the pneumatic device.

A system according to the invention consequently consists of one pneumatic device according to the invention and at least one solenoid valve according to the invention.

In an advantageous embodiment of the invention the coupling section is configured in a way that solenoid valves mounted incorrectly on the pneumatic device will cause an easy detectable malfunction in an end-of-line-testing. The term "mounted correctly" or "mounted incorrectly" refers to the correct function or incorrect function of the system.

A pneumatic device with a solenoid valve mounted correctly on it will consequently function correctly. An end-of-line-testing in the production of pneumatic systems is made to ensure the correct functionality.

In an advantageous embodiment of the invention the at least one coupling section of the pneumatic device is configured to receive exactly one 3/2 directional valve type (3/2) or 2/2 solenoid valve type (2/2), especially one out of a normally closed solenoid valve type (NC) or normally opened solenoid valve type (NO), which are the types/variants used the most in pneumatic systems of vehicles. Hence, in an advantageous embodiment of the solenoid valve according to the invention, the solenoid valve is one of a 3/2 directional valve type (3/2) or a 2/2 directional valve, especially one out of a normally closed solenoid valve type (NC) or normally opened solenoid valve type (NO). The aforementioned types of solenoid valves tend to have a very similar exterior with respect to their size and geometrical shapes of the solenoid bodies. That is why many errors occur when mounting these variants as they can easily be confused. Thus, a pneumatic device with at least one coupling section in which only one of the aforementioned type of solenoids can be mounted reduces scrap and reworking due to incorrect mounting most efficiently.

In another advantageous embodiment of the invention the at least coupling section is formed as a socket with a recess into the surface of the pneumatic device. A solenoid valve comprises a coupling counterpart section of a specific geometry in which the inlet and outlet of the solenoid are formed and which is provided for coupling the solenoid valve to a pneumatic device. By means of a socket with a recess of a specific geometry provided in the pneumatic device, the correct positioning of the solenoid valve can be ensured.

Additionally, in yet another advantageous embodiment of the invention, the socket with the recess of the pneumatic device is formed according to the shape of the coupling counterpart section of the solenoid valve. Thus, when mounting the solenoid valve on the pneumatic device, the coupling counterpart section of the solenoid valve is to be inserted into the corresponding socket with the recess of the pneumatic device. Provided that different types of the solenoid valves that need to be installed on one pneumatic device comprise different shapes of the respective coupling counterpart sections, it is only possible to mount a specific type of solenoid valve into the correct specific recess and therefore into the correct socket of the pneumatic device.

In another advantageous embodiment of the pneumatic device according to the invention, the socket with the recess has an asymmetrical shape such that the coupling counterpart section of a solenoid which has a corresponding asymmetrical shape can only be mounted with a predefined orientation. Thus, not only the correct position of the correct solenoid valve can be ensured, but also its correct orientation, as the solenoid can only be inserted into the socket properly in one specific orientation. Consequently, in an advantageous embodiment of the solenoid valve according to the invention, the solenoid valve has a coupling counterpart section with an asymmetrical shape.

In another advantageous embodiment of the invention, the coupling counterpart section of the solenoid valve comprises a specifically shaped plug, which protrudes outwards of the coupling counterpart section. The specific shape of such a plug allows to differentiate between different types of solenoid valves. Consequently, the coupling section of the pneumatic device also comprises an element which is configured to receive the plug of the solenoid and is specifically shaped in dependence to the shape of the specific plug.

In other embodiments, all specific shapes of the coupling sections and the coupling counterpart sections can be interchanged such that the specific coupling sections are provided at the solenoid valves and the coupling counterpart sections are provided at the pneumatic devices.

The pneumatic device according to the invention is used in a pneumatic brake system of a commercial vehicle such as an air dryer, brake control unit or other air handling devices in the pneumatic brake system.

In the following, the invention is described with more detail with respect to the figures enclosed. The figures show:
- Fig. 1a: schematic view of a NO-solenoid valve in a side view
- Fig. 1b: schematic view of the NO-solenoid valve of Fig. 1a in a front view
- Fig. 2a: schematic view of a NC-solenoid valve in a side view
- Fig. 2b: schematic view of the NC-solenoid valve of Fig. 2a in a front view
- Fig. 3: schematic view of a pneumatic device according to one embodiment of the invention

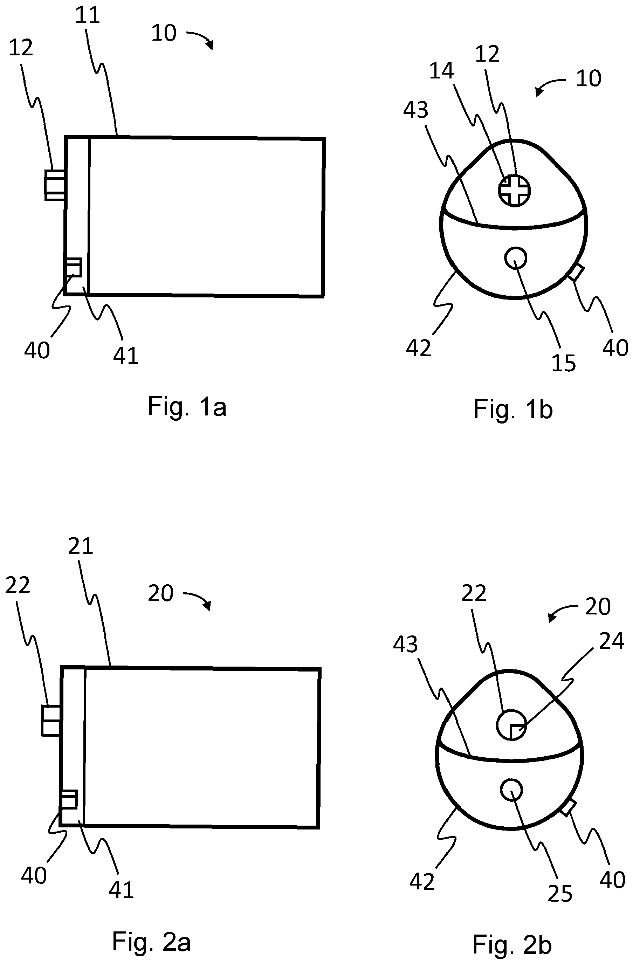

**Fig. 1a** shows a schematic side view of a normally open solenoid valve (NO-solenoid) 10. The NO-solenoid 10 comprises a valve body 11, a coupling counterpart section 41 which comprises a NO-solenoid plug 12. **Fig. 1b** shows the exact same NO-solenoid 10 in a front view, looking frontal on the coupling counterpart section 41. In the front view, a specific design feature 40 can be identified on the silhouette of the coupling section 41. Further, the NO-solenoid shows one inlet 15 and one outlet 14, which are arranged on the NO-solenoid plug 12, which in turn in the front view has a plus-shaped form. Between the NO-solenoid plug 12 and the NO-solenoid inlet 15 there is a separating element 43, which can be formed of an elastic material such as rubber. Around the silhouette of the coupling counterpart section 41 in the front view, there is a seal 42 thus forming together with the separating element 43 two separate chambers around the NO-solenoid inlet 15 and the NO-solenoid outlet 14.

The NC-solenoid 20 shown in **Figs. 2a** and **2b** with its solenoid body 21 and its NC-solenoid plug 22 on the coupling counterpart section 41 basically corresponds from the depicted exterior view basically to the NO-solenoid 10 shown in Figs. 1a and 1b. This is why, only the differences are emphasized in the following. As can be seen in fig. 2b, the NC-solenoid plug 22 has a different shape than the NO-solenoid plug 12. It has a cylindrical shape, with one quarter of the cylinder missing. In the missing quarter, the NC-solenoid outlet is located. The shape of the silhouette of the coupling counterpart section 41 of the NC-solenoid 20 corresponds to that of the NO-solenoid 10.

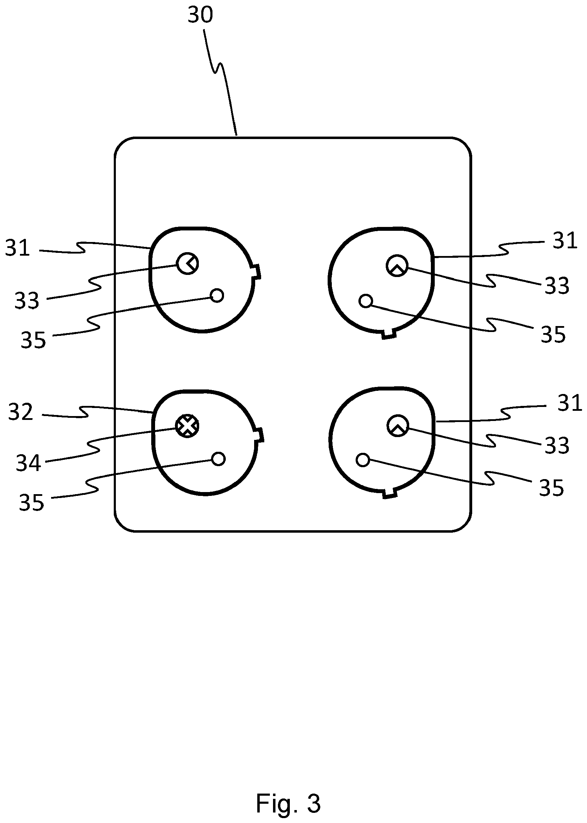

**Fig. 3** shows one embodiment of the pneumatic device 30 according to the invention. It shows four coupling sections 31, 32 of two different shapes. All of the coupling sections 31, 32 are formed as a socket with a recess into the pneumatic device 30 and show the same outside contour. Each has an inlet counterpart 35 for the respective NC-solenoid plug 22 or NO-solenoid plug 12, respectively. The coupling section 32, however, shows a NO-solenoid plug counterpart 34, while the other coupling sections 31 show a NC-solenoid plug counterpart 33. The coupling sections 31, 32 and consequently the coupling counterpart sections 41 have a specific asymmetrical shape formed by the silhouette of the coupling sections and the specific design feature 40.

Both solenoids 10 and 20 are provided to be mounted on the pneumatic device 30 with the side of the respective coupling counterpart sections 41 facing towards the pneumatic device 30 and the coupling counterpart sections 41 being inserted into the respective coupling sections 31, 32. Due to the different shapes of the NO-solenoid plug 12 and the NC-solenoid plug 22 as well as the corresponding different shapes of the respective plug counterparts 33, 34 it can be ensured that only one type of solenoid valve 10 or 20 can be installed in a certain coupling section 31, 32. The asymmetrical shape of the coupling sections 31, 32 and the coupling counterpart sections 41 guarantee that the solenoid valves 10, 20 can only be mounted onto the pneumatic device in one specific orientation. Thus scrap and excessive rework due to incorrect assembly can be prevented.

### REFERENCE LIST

- 10: normally open solenoid (NO-solenoid)
- 11: NO-solenoid body
- 12: NO-solenoid plug (normally open)
- 14: outlet of NO-solenoid
- 15: inlet of NO-solenoid
- 20: normally closed solenoid (NC-solenoid)
- 21: NC-solenoid body
- 22: NC- solenoid plug
- 24: outlet of NC-solenoid
- 25: inlet of NC-solenoid
- 30: pneumatic device
- 31: first coupling section (normally open)
- 32: second coupling section (normally closed)
- 33: NC-solenoid plug counterpart
- 34: NO-solenoid plug counterpart
- 35: inlet counterpart
- 40: specific design feature
- 41: coupling counterpart section
- 42: seal
- 43: separating element

## Claims

1. Pneumatic device (30) configured to receive at least one specific solenoid valve (10, 20) out of solenoid valves (10, 20) of different types, said pneumatic device (30) comprising a coupling section (31, 32) to be coupled with a coupling counterpart section (41) of the solenoid valve (10, 20), **characterised in that** the coupling section (31, 32) is configured in a way that only the one specific type of solenoid valve (10, 20) can be mounted correctly by means of a mutual form-fit design with respect to the particular type of solenoid valve (10, 20).

2. Pneumatic device (30) according to claim 1, wherein the coupling section (31, 32) is configured in a way that solenoid valves of another type than the specific type of solenoid valve can either not be mounted at all or can only be mounted incorrectly on the pneumatic device wherein incorrectly mounted solenoid valves will cause a malfunction in an end-of-line-testing.

3. Pneumatic device (30) according to claim 1, wherein the at least one coupling section (31, 32) is configured to receive exactly one 3/2 directional valve or 2/2-solenoid valve (10, 20), especially one out of a normally closed solenoid valve (20) or a normally open solenoid valve (10).

4. Pneumatic device (30) according to any of the preceding claims, wherein the coupling section (31, 32) is formed as a socket with a recess into the pneumatic device (30).

5. Pneumatic device (30) according to the preceding claim, wherein the recess is formed according to the shape of a coupling counterpart section (41) of the solenoid (10, 20), which is configured to be inserted into the recess of the socket (31, 32).

6. Pneumatic device (30) according to any of the preceding claims, wherein the coupling section has an asymmetrical shape such that the coupling counterpart section of a solenoid which has a corresponding asymmetrical shape can only be mounted with a predefined orientation.

7. Solenoid valve (10, 20) of a specific valve type comprising a coupling counterpart section (41), **characterised in that** the coupling counterpart section (41) is shaped at least partly inversely to the shape of a coupling section (31, 32) of a pneumatic device (30) according to any of claims 1 to 6, and wherein the shape is configured such that only that specific valve type is mountable to the corresponding specific coupling section (31, 32) of the pneumatic device (30).

8. Solenoid valve (10, 20) according to the preceding claim, wherein the solenoid valve (10, 20) is one of a 3/2-directional valve or a 2/2-directional valve, especially one out of a normally closed solenoid valve (20) or a normally open solenoid valve (10).

9. Solenoid valve (10, 20) according to one of claim 6 or 7, wherein the coupling section (41) has an asymmetrical shape such that the coupling counterpart section of the solenoid can only be mounted with a predefined orientation to a pneumatic device according to claim 5 and/or the coupling section (41) has a specific plug (12, 22) protruding outwards of the coupling section.

10. System comprising at least one pneumatic device (30) according to any of claims 1 to 6, and at least one solenoid valve (10, 20) according to any of claims 7 to 9.

11. System according to the preceding claim, wherein the pneumatic device comprises several coupling sections, each configured to receive a specific coupling counterpart section of a specific solenoid valve of a specific type.

12. Pneumatic device according to any of claims 1 to 6, used in a pneumatic brake system of a commercial vehicle such as an air dryer, brake control unit or other air handling devices in the pneumatic brake system.

## Patentansprüche

1. Pneumatische Vorrichtung (30), die konfiguriert ist, um mindestens ein spezifisches Magnetventil (10, 20) aus Magnetventilen (10, 20) verschiedener Typen aufzunehmen, wobei die pneumatische Vorrichtung (30) einen Kupplungsabschnitt (31, 32) umfasst, der mit einem Kupplungsgegenstückabschnitt (41) des Magnetventils (10, 20) gekoppelt werden soll, **dadurch gekennzeichnet, dass** der Kupplungsabschnitt (31, 32) derart konfiguriert ist, dass nur der eine spezifische Typ des Magnetventils (10, 20) mittels eines gegenseitigen formschlüssigen Designs in Bezug auf den bestimmten Typ des Magnetventils (10, 20) korrekt montiert werden kann.

2. Pneumatische Vorrichtung (30) nach Anspruch 1, wobei der Kupplungsabschnitt (31, 32) derart konfiguriert ist, dass Magnetventile eines anderen Typs als des spezifischen Magnetventiltyps entweder gar nicht oder nur fehlerhaft an der pneumatischen Vorrichtung montiert werden können, wobei fehlerhaft montierte Magnetventile eine Fehlfunktion bei einem End-of-Line-Test verursachen werden.

3. Pneumatische Vorrichtung (30) nach Anspruch 1, wobei der mindestens eine Kupplungsabschnitt (31, 32) zur Aufnahme genau eines 3/2-Wegeventils oder 2/2-Magnetventils (10, 20) konfiguriert ist, insbesondere eines aus einem stromlos geschlossenen Magnetventil (20) oder einem stromlos offenen Magnetventil (10).

4. Pneumatische Vorrichtung (30) nach einem der vorstehenden Ansprüche, wobei der Kupplungsabschnitt (31, 32) als Buchse mit einer Aussparung in der pneumatischen Vorrichtung (30) ausgebildet ist.

5. Pneumatische Vorrichtung (30) nach dem vorstehenden Anspruch, wobei die Aussparung entsprechend der Form eines Kupplungsgegenstückabschnitts (41) des Elektromagneten (10, 20) ausgebildet ist, der zum Einsetzen in die Aussparung der Buchse (31, 32) konfiguriert ist.

6. Pneumatische Vorrichtung (30) nach einem der vorstehenden Ansprüche, wobei der Kupplungsabschnitt eine asymmetrische Form aufweist, sodass der Kupplungsgegenabschnitt eines Elektromagneten, der eine entsprechende asymmetrische Form aufweist, nur mit einer vordefinierten Ausrichtung montiert werden kann.

7. Magnetventil (10, 20) eines spezifischen Ventiltyps, umfassend einen Kupplungsgegenstückabschnitt (41), **dadurch gekennzeichnet, dass** der Kupplungsgegenstückabschnitt (41) mindestens teilweise umgekehrt zur Form eines Kupplungsabschnitts (31, 32) einer pneumatischen Vorrichtung (30) nach einem der Ansprüche 1 bis 6 geformt ist, und wobei die Form so konfiguriert ist, dass nur dieser spezifische Ventiltyp an dem entsprechenden spezifischen Kupplungsabschnitt (31, 32) der pneumatischen Vorrichtung (30) montierbar ist.

8. Magnetventil (10, 20) nach dem vorstehenden Anspruch, wobei das Magnetventil (10, 20) eines von einem 3/2-Wegeventil oder einem 2/2-Wegeventil ist, insbesondere eines aus einem stromlos geschlossenen Magnetventil (20) oder einem stromlos offenen Magnetventil (10) ist.

9. Magnetventil (10, 20) nach einem der Ansprüche 6 oder 7, wobei der Kupplungsabschnitt (41) eine asymmetrische Form aufweist, sodass der Kupplungsgegenabschnitt des Elektromagneten nur mit einer vordefinierten Ausrichtung an einer pneumatischen Vorrichtung nach Anspruch 5 montiert werden kann und/oder der Kupplungsabschnitt (41) einen spezifischen, aus dem Kupplungsabschnitt herausstehenden Stecker (12, 22) aufweist.

10. System, umfassend mindestens eine pneumatische Vorrichtung (30) nach einem der Ansprüche 1 bis 6 und mindestens ein Magnetventil (10, 20) nach einem der Ansprüche 7 bis 9.

11. System nach dem vorstehenden Anspruch, wobei die pneumatische Vorrichtung mehrere Kupplungsabschnitte umfasst, die jeweils konfiguriert sind, um einen spezifischen Kupplungsgegenstückabschnitt eines spezifischen Magnetventils eines spezifischen Typs aufzunehmen.

12. Pneumatische Vorrichtung nach einem der Ansprüche 1 bis 6, die in einem pneumatischen Bremssystem eines Nutzfahrzeugs verwendet wird, wie z. B. ein Lufttrockner, eine Bremssteuereinheit oder andere Lüftungsvorrichtungen im pneumatischen Bremssystem.

## Revendications

1. Dispositif pneumatique (30) configuré pour recevoir au moins une électrovanne spécifique (10, 20) parmi des électrovannes (10, 20) de différents types, ledit dispositif pneumatique (30) comprenant une section d'accouplement (31, 32) devant être couplée à une section d'accouplement complémentaire (41) de l'électrovanne (10, 20), **caractérisé en ce que** la section d'accouplement (31, 32) est configurée de telle sorte que seul le type spécifique d'électrovanne (10, 20) peut être monté correctement grâce à une conception à complémentarité de formes par rapport au type particulier d'électrovanne (10, 20).

2. Dispositif pneumatique (30) selon la revendication 1, dans lequel la section d'accouplement (31, 32) est configurée de telle sorte que des électrovannes d'un autre type que le type spécifique d'électrovanne ne peuvent pas être montées du tout ou ne peuvent être montées que de manière incorrecte sur le dispositif pneumatique dans lequel des électrovannes montées de manière incorrecte provoqueront un dysfonctionnement lors d'un test en fin de ligne.

3. Dispositif pneumatique (30) selon la revendication 1, dans lequel la au moins une section d'accouplement (31, 32) est configurée pour recevoir exactement une vanne directionnelle 3/2 ou une électrovanne 2/2 (10, 20), en particulier l'une d'une électrovanne normalement fermée (20) ou d'une électrovanne normalement ouverte (10).

4. Dispositif pneumatique (30) selon l'une quelconque des revendications précédentes, dans lequel la section d'accouplement (31, 32) se présente sous la forme d'une prise pourvue d'un évidement dans le dispositif pneumatique (30).

5. Dispositif pneumatique (30) selon la revendication précédente, dans lequel l'évidement est formé en fonction de la forme d'une section d'accouplement complémentaire (41) de l'électrovanne (10, 20) qui est configurée pour être insérée dans l'évidement de la prise (31, 32).

6. Dispositif pneumatique (30) selon l'une quelconque des revendications précédentes, dans lequel la section d'accouplement présente une forme asymétrique de telle sorte que la section d'accouplement complémentaire d'une électrovanne qui présente une forme asymétrique correspondante ne peut être montée que dans une orientation prédéfinie.

7. Électrovanne (10, 20) d'un type d'électrovanne spécifique comprenant une section d'accouplement complémentaire (41), **caractérisée en ce que** la section d'accouplement complémentaire (41) présente une forme au moins en partie inverse à la forme d'une section d'accouplement (31, 32) d'un dispositif pneumatique (30) selon l'une quelconque des revendications 1 à 6, et dans laquelle la forme est configurée de telle sorte que seul ce type d'électrovanne spécifique peut être monté sur la section d'accouplement spécifique correspondante (31, 32) du dispositif pneumatique (30).

8. Électrovanne (10, 20) selon la revendication précédente, dans laquelle l'électrovanne (10, 20) est l'une d'une vanne directionnelle 3/2 ou d'une vanne directionnelle 2/2, plus précisément l'une d'une électrovanne normalement fermée (20) ou d'une électrovanne normalement ouverte (10).

9. Électrovanne (10, 20) selon l'une des revendications 6 ou 7, dans laquelle la section d'accouplement (41) présente une forme asymétrique telle que la section d'accouplement complémentaire de l'électrovanne ne peut être montée que dans une orientation prédéfinie sur un dispositif pneumatique selon la revendication 5 et/ou la section d'accouplement (41) présente une fiche spécifique (12, 22) faisant saillie vers l'extérieur de la section d'accouplement.

10. Système comprenant au moins un dispositif pneumatique (30) selon l'une quelconque des revendications 1 à 6 et au moins une électrovanne (10, 20) selon l'une quelconque des revendications 7 à 9.

11. Système selon la revendication précédente, dans lequel le dispositif pneumatique comprend plusieurs sections d'accouplement, chacune configurée pour recevoir une section d'accouplement complémentaire spécifique d'une électrovanne spécifique d'un type spécifique.

12. Dispositif pneumatique selon l'une quelconque des revendications 1 à 6, utilisé dans un système de frein pneumatique d'un véhicule commercial, comme un sécheur d'air, une unité de commande de frein ou d'autres dispositifs de traitement de l'air dans le système de frein pneumatique.
